# EUROPÄISCHE PATENTSCHRIFT

(11) **EP 1 137 972 B1**
(45) Veröffentlichungstag und Bekanntmachung des Hinweises auf die Patenterteilung: **04.02.2004**
(21) Anmeldenummer: 99955590.7
(22) Anmeldetag: 23.11.1999
(51) Int. Cl.: G05B 19/042

(54) **AUTOMATISIERUNGSSYSTEM ZUR LÖSUNG EINER PROZESSTECHNISCHEN AUFGABENSTELLUNG UND VERFAHREN HIERZU**
AUTOMATION SYSTEM FOR SOLVING A TECHNICAL-PROCESS TASK AND CORRESPONDING METHOD
SYSTEME D'AUTOMATISATION POUR LA REALISATION DE TACHES DEFINIES DANS LE CADRE DE LA TECHNIQUE DES PROCESSUS, ET PROCEDE ASSOCIE

(30) Priorität: 24.11.1998 AT 197298
(43) Veröffentlichungstag der Anmeldung: 04.10.2001
(73) Patentinhaber: Automationx Software For Industrial Automation GmbH, 8074 Grambach (AT)
(72) Erfinder: MAITZ, Gerhard, A-8055 Graz (AT)
(74) Vertreter: Secklehner, Günter, Dr.
(86) Internationale Anmeldenummer: PCT/AT1999/000286
(87) Internationale Veröffentlichungsnummer: WO 2000/031597

(56) Entgegenhaltungen:
- EP-A- 0 825 506
- WO-A-91/19237
- WO-A-97/00475
- WO-A-97/26587
- WO-A-98/49620
- US-A- 5 805 442
- SCHMOLL J: "WIRD OLE FOR PROCESS CONTROL (OPC) EIN NEUER INDUSTRIESTANDARD?" AUTOMATISIERUNGSTECHNISCHE PRAXIS - ATP,DE,OLDENBOURG VERLAG. MUNCHEN, Bd. 39, Nr. 5, 1. Mai 1997 (1997-05-01), Seiten 11-12,14-17, XP000689324 ISSN: 0178-2320

## Beschreibung

Die Erfindung betrifft ein Automatisierungssystem sowie ein Verfahren zur Lösung einer automatisierungstechnischen Aufgabenstellung, wie dies in den Ansprüchen 1 und 15 gekennzeichnet ist.

Die verschiedenen Anteile einer automatisierungstechnischen Aufgabe wurden bisher unter stark unterschiedlichen Umgebungsbedingungen gelöst. So wurde z.B. der Steuerungsanteil bevorzugt mit den Mitteln, wie sie durch die technische Konzeption spezieller Automatisierungsgeräte bzw. speicherprogrammierbarer Steuerungen (SPS) vorgegeben werden, realisiert. Der für die Lösung automatisierungstechnischer Aufgaben vielfach ebenso notwendige Visualisierungsanteil und die Bedienerschnittstelle sind dem Steuerungsanteil üblicherweise überlagert worden und mußten zuvor erwähnte Anteile grundsätzlich Daten mit dem Steuerungsanteil austauschen. Zudem standen der Visualisierungsanteil und die Bedienerschnittstelle sowohl physikalisch in Form von Geräten als auch methodisch durch die verschiedenen Programmierverfahren häufig in einem anderen Zusammenhang als der Steuerungsanteil. Die datenbezogenen Anteile wie die Datenerfassung und die Datenauswertung wurden ebenso wie die Visualisierung dem Steuerungsanteil überlagert. Nachteilig ist dabei, daß die Zusammenstellung der einzelnen Automatisierungsanteile zur Lösung der gesamten Aufgabe aufwendig ist und die Komplexität des Gesamtsystems dabei wesentlich erhöht wird, wodurch nachfolgende Wartung- bzw. Instandhaltungstätigkeiten wesentlich erschwert sind.

Die EP 0 825 506 A2 beschreibt eine fernsteuerbares Automatisierungssystem aufbauend auf einer Client/Server-Konfiguration, bei dem Softwareobjekte verwendet werden und bei dem eine Datenkommunikation zwischen den Client- und Serverrechnern per Internet bzw. Intranet möglich ist. Die Clientrechner verfügen dabei über einen sogenannten Informationsclient, insbesondere über einen sogenannten Internet-Webbrowser, welcher im Stande ist, kleinere Programmodule, die im Rahmen einer größeren Anwendung für bestimmte, beschränkte Zwecke dienen, vom Serverrechner anzufordern und zu empfangen. Der Informationsclient bzw. der dementsprechende Webbrowser ist dabei hardwareunabhängig und betriebssystemunabhängig lauffähig. Der Clientrechner führt dabei innerhalb einer virtuellen Maschinenumgebung die Programmodule zur Konfiguration des Clientrechners als Prozeßcontroller aus. Dies ermöglicht die Kommunikation über das weitläufige Netzwerk bzw. Internet und die Überwachung und Steuerung des entfernten Prozesses über diese Kommunikationswege. Mit diesem System ist zwar eine fernbediente Automatisierung des technischen Prozesses möglich, eine funktionelle Koordination der verschiedenen Automatisierungsanteile, welche die Lösung einer automatisierungstechnischen Aufgabenstellung in einem einheitlichen Zusammenhang zuläßt, liegt jedoch nicht vor und wird durch diese vorbekannte Ausgestaltung auch nicht angeregt.

Die WO 91/19237 A1 offenbart grafische Programmierverfahren zur Entwicklung von Programmen in grafischen High-Level-Sprachen vor der Kompilierung dieser Programme zu einer Datei und der Übertragung dieser für den Einsatz in Steuerungen für die Industrie und Wirtschaft. Die Programmierverfahren beinhalten Prozeß-, Hardwareund Programmbearbeitungsfunktionen um sowohl Prozeß- als auch Hardware-I/O-Punkte zu bestimmen und diese mit Variablen in einem Steuerprogramm zu verbinden. Mit diesem vorgestellten System ist zwar eine grafikorientierte Programmierung ermöglicht, eine Aufsplittung der Datenanteile auf unterschiedliche Hardwareebenen ist bei diesem vorbekannten System jedoch nicht gegeben und wird dies in keinster Weise durch den Offenbarungsinhalt der WO-A1 nahegelegt.

Ferner zeigt die WO 97/26587 A1 ein Automatisierungsgerät bzw. ein mit diesem Automatisierungsgerät aufbaubares, durchgängiges Automatisierungssystem, welches eine weltweite Bedienung und Kontrolle eines technischen Prozesses ermöglicht. Dabei sind objektorientiert ausgebildete Software-Funktionsbausteine vorgesehen, die über das Internet und eine Internet-Kommunikationsschnittstelle des Automatisierungsgerätes in dieses ladbar sind. Weiters umfaßt dieses Automatisierungsgerät ein Ablaufsystem für die Software-Funktionsbausteine zur Einbindung einzelner objektorientierter Software-Funktionsbausteine und zur Bearbeitung des Steuerprogramms. Hiermit kann zwar ein Automatisierungsgerät geschaffen werden, welches für den Einsatz in einem global verteilten Automatisierungsverbund geeignet ist, die Lösung einer automatisierungstechnischen Aufgabenstellung mit all ihren erforderlichen Automatisierungsanteilen innerhalb einer einheitlichen Oberfläche und die Splittung der jeweiligen Datenanteile auf unterschiedliche Hardwareebenen wird aber in der WO-A1 in keinster Weise beschrieben.

Der vorliegenden Erfindung liegt die Aufgabe zugrunde, die Lösung einer automatisierungstechnischen Aufgabenstellung zu vereinfachen.

Diese Aufgabe der Erfindung wird durch die Merkmale des Anspruches 1 und unabhängig davon auch durch ein Verfahren gemäß den im Anspruch 15 angegebenen Merkmalen gelöst. Die sich aus den Merkmalen des Kennzeichenteils des Anspruches 1 oder 15 ergebenden Vorteile liegen darin, daß nunmehr eine funktionelle und nicht mehr datenbezogene Koordination der Automatisierungsanteile erzielt ist. Dadurch werden insbesondere überaus problem- und prozeßnahe Lösungsansätze erzielt. Ein wesentlicher Vorteil ist auch dadurch gegeben, daß der bislang erforderliche Integrationsaufwand für eigene Integratoren, welche die einzelnen Automatisierungsanteile zu einem Gesamtprojekt kombiniert haben, erübrigt ist. Dadurch ist aber auch eine präventive Ausschaltung von datenbezogenen Inkonsistenzen erreicht. Ein wesentlicher Vorteil besteht zudem darin, daß eine einheitliche Oberfläche für alle Programmier- und Konfigurationsteile geschaffen werden kann, wodurch kaum noch Einarbeitungszeiten bei der Realisierung der unterschiedlichen Automatisierungsanteile auftreten. Die Oberfläche für alle Programmier- und Konfigurationsanteile kann dadurch auch unabhängig von den verwendeten Geräten und Komponenten gestaltet werden.

Mit dem erfindungsgemäßen Automatisierungssystem bzw. demgemäßen Verfahren kann nunmehr auch ein Instrument für Experten verschiedener Fachgebiete zur Verfügung gestellt werden, die ihr spezifisches Wissen in vollständige Module verpacken können und anderen, nicht fachmännischen Benutzern in vordefinierten Automatisierungsklassen zur Verfügung stellen können.

Da die Automatisierungsklassen nunmehr auch nur noch problem- und keine systemspezifischen Anteile enthalten, ist auch ein einfacher Tausch oder ein Handel von Automatisierungsklassen ermöglicht. Die Automatisierungsklassen können sich dabei durch ihr programmierte Intelligenz definiert in bestehende Umgebungsbedingungen einfügen. Durch die gekennzeichnete exemplarische Lösung der Problemstellung und die automatisierungstechnische Vollständigkeit der Lösung sowie die Verkapselung von programmtechnischen Details ist auch eine einfache Verwendung oder Verbreitung der Automatisierungsklassen erreicht. Zudem wird die Erstellung von anwachsend komplexen Automatisierungsklassen auf der Basis von bestehenden Automatisierungsklassen unterstützt und dadurch der Übergang von hauptsächlich technischer bzw. administrativer zu hauptsächlich problemloser Programmierung forciert.

Weitere vorteilhafte Ausbildungen bzw. Maßnahmen sind in den Ansprüchen 2 bis 14 bzw. 16 bis 26 beschrieben. Die damit erzielbaren Vorteile sind der detaillierten Figurenbeschreibung zu entnehmen.

Die Erfindung wird im nachfolgenden anhand der in den Zeichnungen dargestellten Ausführungsbeispiele näher erläutert.

Es zeigen:
- Fig. 1: den Aufbau eines Automatisierungssystems untergliedert in die einzelnen Systemebenen, in stark vereinfachter, schematischer Darstellung;
- Fig. 2: die Entwicklung einer Automatisierungsklasse symbolisierend den einheitlichen Kontext für die verschiedenen Automatisierungsanteile;
- Fig. 3: typische Automatisierungsanteile einer automatisierungstechnischen Aufgabe gegliedert nach Haupt- und Nebenaspekten;
- Fig. 4: das Laufzeitsystem einer Automatisierungsklasse und die Gliederung einer Automatisierungsklasse in Server- und Clientanteile.

Einführend sei festgehalten, daß in den unterschiedlich beschriebenen Ausführungsformen gleiche Elemente mit gleichen Bezugszeichen bzw. gleichen Bauteilbezeichnungen versehen werden, wobei die in der gesamten Beschreibung enthaltenen Offenbarungen sinngemäß auf gleiche Elemente mit gleichen Bezugszeichen bzw. gleichen Bauteilbezeichnungen übertragen werden können. Auch sind die in der Beschreibung gewählten Lageangaben, wie z.B. oben, unten usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

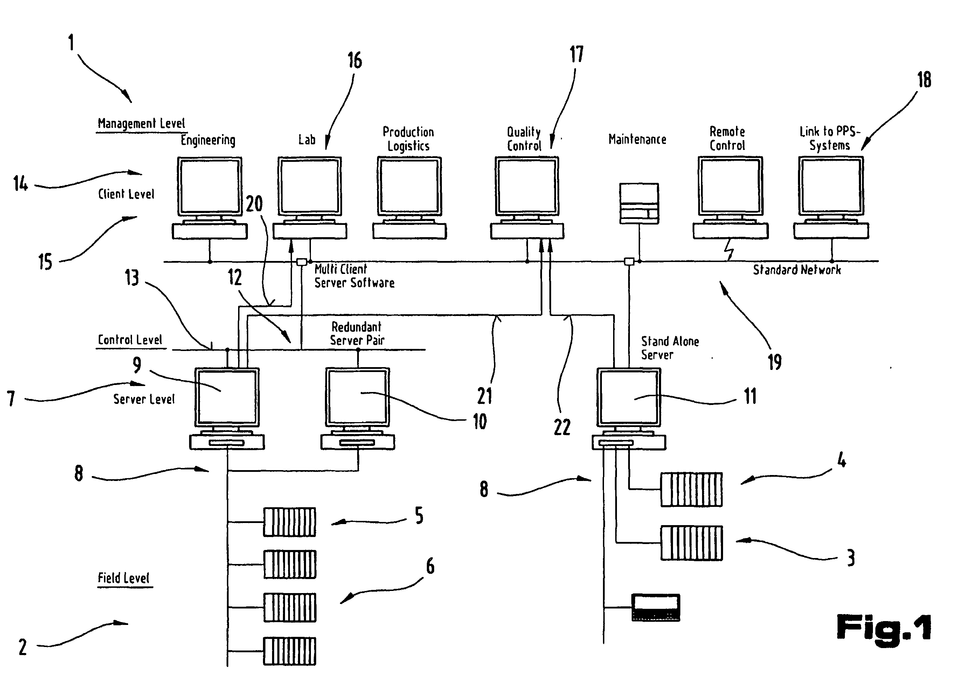

In Fig. 1 ist ein Automatisierungssystem 1 zum weitgehend automatisierten Betreiben einer technischen Anlage zur Abwicklung eines Prozesses der Industrie, beispielsweise der chemischen Industrie, veranschaulicht.

Das Automatisierungssystem 1 ist dabei grundlegend in drei Ebenen kategorisierbar. Bezugnehmend auf die Bilddarstellung ist die unterste Ebene durch eine Feldebene 2 gebildet, welche zumindest standardmäßig verfügbare Automatisierungsgeräte 3, 4 vor allem in Art sogenannter speicherprogrammierbarer Steuerungen sowie alternativ oder in Kombination dazu zumindest ein Schnittstellenmodul 5, 6 mit mehreren elektrischen Ein- und/oder Ausgängen umfaßt.

Die Ein- und/oder Ausgänge der Schnittstellenmodule 5, 6 bzw. der Automatisierungsgeräte 3, 4 sind dabei zur elektrischen Verbindung mit einer nicht dargestellten Sensorund/oder Aktorebene des technischen Prozesses vorgesehen. Die elektrische Verbindung zwischen der Feldebene 2 und einer auf die Grafik bezogenen, übergeordneten Steuerungsebene 7 erfolgt bevorzugt über an sich bekannte Feldbussysteme 8, wie z.B. einen Interbus, einen Profibus oder dgl.

Die Steuerungsebene 7 umfaßt zumindest einen elektronischen Serverrechner 9, 10, 11. Wenigstens einer der Serverrechner 11 kann dabei als sogenannter "stand alone server" operieren, wohingegen weitere Serverrechner 9, 10 als sogenanntes "redundantes Serverpaar" 12 zusammenwirken können. Das redundante Serverpaar 12 ist dazu vorgesehen, daß bei Ausfall eines Serverrechners 9 oder 10 des Serverpaares 12 der weitere Serverrechner 9 bzw. 11 die Aufgaben des ausgefallenen Serverrechners 9 bzw. 11 möglichst unterbrechungsfrei übernehmen kann und somit die Aufrechterhaltung des technischen Prozesses sichert. Die Serverrechner 9, 10, 11 weisen bevorzugt entsprechende Schnittstellenkarten auf, um mit den Komponenten der Feldebene 2 kommunizieren zu können.

Zumindest die Serverrechner 9, 10 des Serverpaares 12 in der Steuerungsebene 7 stehen dabei über ein Netzwerk 13 zur Übertragung von Daten in kommunikativer Verbindung.

Die einzelnen softwaregesteuerten Serverrechner 9, 10, 11 wiederum stehen mit einer auf die Grafik bezogenen übergeordneten Verwaltungsebene 14 in leitungsgebundener oder auch drahtloser Verbindung um untereinander kommunizieren bzw. Steuerungsund/oder Prozeßdaten übertragen zu können.

Die Verwaltungsebene 14 ist dabei mit einer Clientebene 15 vergleichbar, welche mehrere softwaregesteuerte Clientrechner 16, 17, 18 umfaßt. Über diese Clientrechner 16 bis 18 sind dabei eine Vielzahl von Verwaltungs- bzw. Kontrollfunktionen betreffend beispielsweise die Entwicklung, Produktionslogistik, Qualitätskontrolle, Wartung, Fernbedienung und dgl. ausführbar.

Die Clientrechner 16 bis 18 stehen dabei untereinander über ein Standardnetzwerk 19 in kommunikativer Verbindung. Bevorzugt ist das Standardnetzwerk 19 für die Clientrechner 16 bis 18 in der Verwaltungsebene 14 mit dem vorerwähnten Netzwerk 13 der Steuerungsebene 7 leitungsgekoppelt, um eine Datenübertragung zwischen dem Standardnetzwerk 19 der Verwaltungsebene 14 und dem Netzwerk 13 der Steuerungsebene 7 zu ermöglichen.

Gleichfalls kann das Standardnetzwerk 19 zumindest in Teilbereiche der Steuerungsebene 7 übergreifen und dabei insbesondere den weitgehend autarken Serverrechner 11 einbinden.

Bevorzugt bestehen auch einzelne Direktverbindungen 20 bis 22 zwischen bestimmten Serverrechnern 9 bis 11 und bestimmten Clientrechnern 16 bis 18, wobei die Kommunikations- bzw. Datenübertragungsrichtung der Direktverbindungen 20 bis 22 ausgehend von den Serverrechnern 9 bis 11 zu den Clientrechnern 16 bis 18 definiert ist. Diese Direktverbindungen 20 bis 22 ermöglichen den Serverrechnern 9 bis 11 eine direkte, gezielte Datenübertragung in die Verwaltungsebene 14, wobei die Direktverbindungen 20 bis 22 vorwiegend zur Übersendung von Daten bzw. Nachrichten höherer Priorität eingesetzt sind.

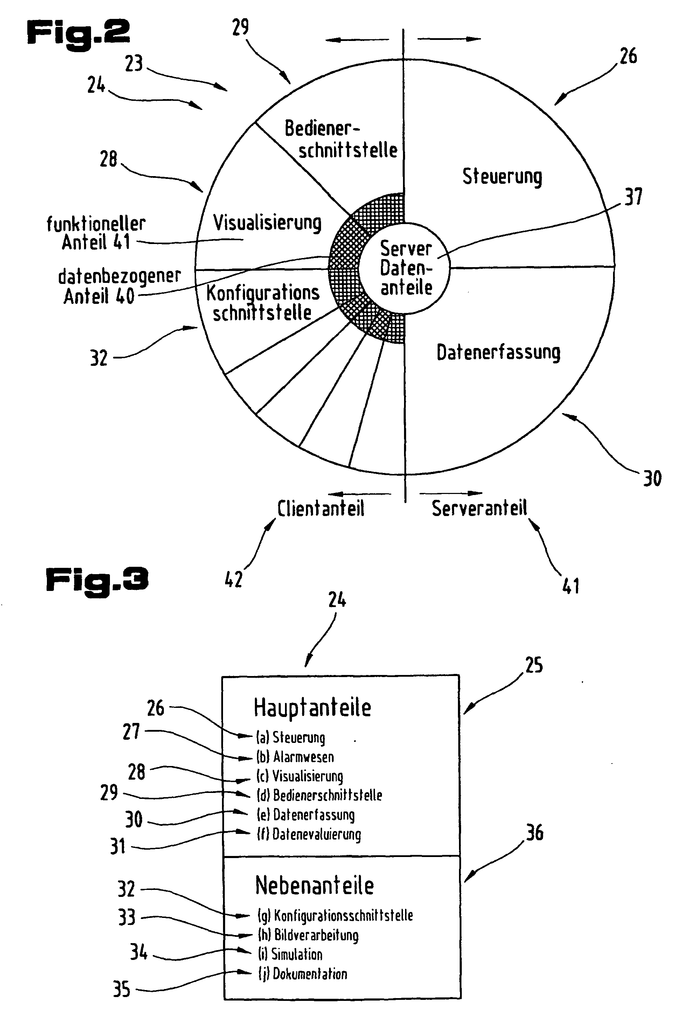

In Fig. 2 ist die erfindungsgemäße Entwicklung von Automatisierungsklassen 23 zur Verwertung in einem zuvor erläuterten Automatisierungssystem veranschaulicht. Die sektorenartige Zusammensetzung einzelner Automatisierungsanteile 24 einer automatisierungstechnischen Aufgabe gemäß der tabellarischen Aufstellung in Fig. 3 zu einem in sich geschlossenen Kreis veranschaulicht dabei, daß die Entwicklung der Automatisierungsklassen 23 zur Anwendung in einem Automatisierungssystem in einem einheitlichen Kontext für die verschiedenen Automatisierungsanteile 24 stattfindet. Insbesondere ist dadurch das erfindungsgemäße Verfahren, mit welchem die unterschiedlichen Aspekte bzw. Automatisierungsanteile 24 einer automatisierungstechnischen Aufgabe in einem einheitlichen Kontext gelöst werden, symbolisiert.

Eine automatisierungstechnische Aufgabe kann insbesondere in eine oder mehrere Automatisierungsanteile 24 - gemäß Fig. 3 - gegliedert werden. Einem Hauptanteil 25 ist dabei vor allem eine Steuerung 26, ein Alarmwesen 27, eine Visualisierung 28, eine Bedienerschnittstelle 29, eine Datenerfassung 30 und/oder eine Datenevaluierung 31 zuzuzählen.

Weitere Automatisierungsanteile 24 einer automatisierungstechnischen Aufgabe können durch eine Konfigurationsschnittstelle 32, eine Bildverarbeitung 33, eine Simulation 34 und/oder durch eine Dokumentation 35 definiert sein, wobei letztgenannte Automatisierungsanteile 24 häufig einen Nebenanteil 36 der automatisierungstechnischen Aufgabe darstellen.

Die unterschiedlichen Automatisierungsanteile 24 sind je nach Aufgabenstellung unterschiedlich stark ausgeprägt oder vorhanden. Während etwa bei kleineren und überwiegend unbeaufsichtigten prozeßtechnischen Problemstellungen, wie z.B. bei einer Kläranlage, der Anteil für die Steuerung 26 dominant ist, sind bei vergleichsweise komplexeren Prozessen, wie z.B. in der chemischen Industrie, die Visualisierung 28, das Alarmwesen 27 und die Bedienerschnittstelle 29 von herausragender Bedeutung.

Bei großteils fertigungstechnischen Problemstellungen, wie z.B. in der Automobilindustrie, sind im Sinne der Produktionslogistik, Qualitätssicherung und Reproduktion die Automatisierungsanteile 24 betreffend Datenerfassung 30 und Datenevaluierung 31 vorherrschend.

Das erfindungsgemäße Automatisierungssystem bzw. die diesem zugrundeliegenden Verfahrensschritte lassen die Lösung mehrerer zuvor aufgelisteter Automatisierungsanteile 24 einer Aufgabenstellung in einem einheitlichen Kontext zu.

Dazu wird die gesamte, technische Aufgabenstellung exemplarisch in einem sogenannten Objektprototypen oder in einer Automatisierungsklasse 23 gelöst. Der gesamte Prozeß kann auch als die Entwicklung einer Automatisierungsklasse 23 bezeichnet werden.

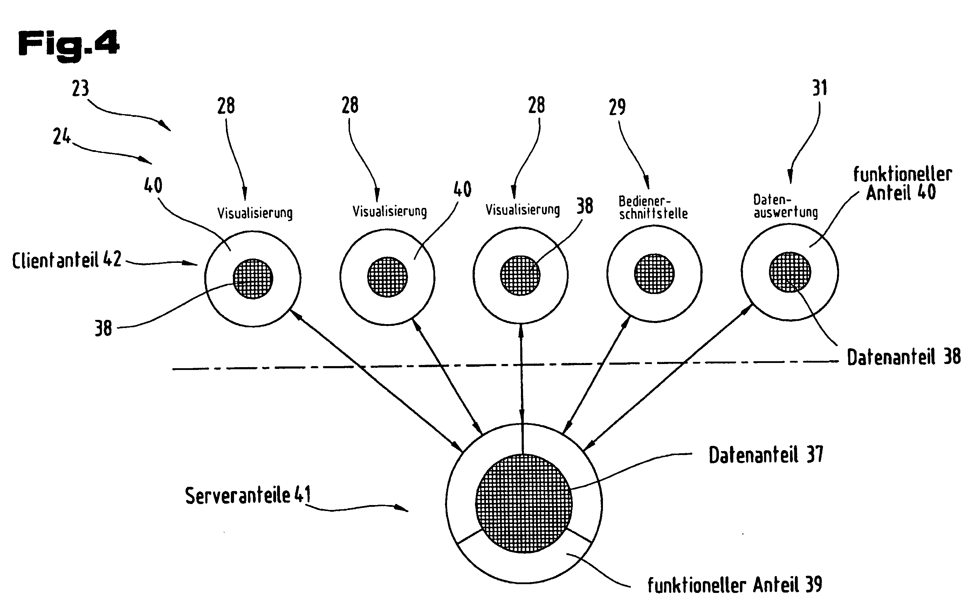

Der erste Schritt in diesem Entwicklungsprozeß ist die Erstellung eines klassenspezifischen Datensatzes. Dabei werden neben Steuerungsdaten auch Daten für die Visualisierung 28, Daten für die Bedienerschnittstelle 29 und/oder für die Datenerfassung 30 definiert. Unter Daten für die Visualisierung 28 sind z.B. die Farbwahl, die Grafiken, die Schrifteigenschaften und dgl. zu verstehen. Die Bedienerschnittstelle 29 kann z.B. durch Schalter, Schieberregler, editierbare Textfelder und dgl. definiert werden. Für die Datenerfassung 30 werden z.B. Tabellen und Datenbankkomponenten bestimmt. Wesentlich ist, daß alle Teile des zu erstellenden klassenspezifischen Datensatzes innerhalb des Kontextes der entstehenden Automatisierungsklasse 23 definiert werden. Ein weiteres bedeutendes Merkmal besteht darin, daß eine Kategorisierung nach serverbezogenen Datenanteilen 37 und clientbezogenen Datenanteilen 38 vorgenommen wird bzw. realisiert ist, wie dies insbesondere auch in Fig. 4 veranschaulicht ist. Die Einstufung in serverbezogene bzw. clientbezogene Datenanteile 37, 38 erfolgt im Hinblick auf die unterschiedlichen Automatisierungsanteile 24 und unterschiedlichen Gerätetypen auf denen die einzelnen Automatisierungsanteile 24 nachfolgend exekutiert bzw. ausgeführt werden. Die Erstellung des klassenspezifischen Datensatzes erfolgt bevorzugt in graphischer und/oder textueller Form.

Der nächste Schritt in der Entwicklung einer Automatisierungsklasse 23 ist die Bereitstellung von Funktionalitäten. Die Funktionalitäten der entstehenden Automatisierungsklasse 23 beziehen sich dabei auf den im ersten Schritt definierten Datensatz und sind weiters an die verschiedenen Automatisierungsanteile 24 gemäß Fig. 3 angepaßt. Wesentlich ist wiederum, daß alle server- bzw. clientbezogenen Funktionsanteile 39, 40 der automatisierungstechnischen Aufgabe innerhalb des Kontextes der entstehenden Automatisierungsklasse 23 gelöst werden. Ein weiteres bedeutendes Merkmal besteht darin, daß eine Kategorisierung nach serverbezogenen Funktionsanteilen 39 und clientbezogenen Funktionsanteilen 40 realisiert ist bzw. erhalten bleibt, wie dies insbesondere aus Fig. 4 ersichtlich ist. Die Funktionalitäten bzw. Funktionsanteile 39, 40 sind durch graphische und/oder textuelle Mechanismen gebildet, die jeweils optimal auf die Anforderungen eines bestimmten Automatisierungsanteils 24 ausgerichtet sind. Diese Mechanismen orientieren sich an der IEC 1131-3 und zwar nicht nur wie darin vorgesehen für die Steuerung 26, sondern auch für die Visualisierung 28, die Datenerfassung 30 und zumindest einige der anderen Automatisierungsanteile 24.

Eine gemäß vorstehend genannten Richtlinien schrittweise erstellte Automatisierungsklasse 23 ist nachfolgend für eine Publikation in einer Bibliothek vorgesehen und kann somit anderen Anwendern zugänglich gemacht werden. Auf diese Bibliothek unterschiedlicher Automatisierungsklassen 23 ist dabei zumindest unternehmensweit, z.B. über eine Intranetanbindung oder auch standortübergreifend über globale Datenkommunikationseinrichtungen, wie z.B. über das sogenannte Internet, zugreifbar.

Ein für die Automatisierung bestimmtes, reales Projekt setzt sich aus einer oder mehreren individuellen Kopien von einer oder mehreren der Automatisierungsklassen 23 zusammen. Jede Kopie bzw. jedes sogenannte Objekt ist dabei ein detailgetreues Abbild der Automatisierungsklasse 23 in dem Sinn, daß ausschließlich die Struktur des Datensatzes und die Funktionalitäten von der jeweiligen Automatisierungsklasse 23 übernommen werden. Jeder Datensatz bzw. jedes Objekt ist jedoch individuell und kann individuell adressiert werden.

Die Verknüpfung der individuellen Kopien bzw. Objekte zu realen Projekten erfolgt ausschließlich mit den selben Mitteln, wie sie zur Erstellung der Automatisierungsklassen 23 vorgesehen sind bzw. verwendet wurden. Dadurch und gegebenenfalls unter Zuhilfenahme einiger zusätzlicher Mittel lassen sich die Automatisierungsanteile 24 für konkrete Projekte oder prozeßtechnische Problemstellungen wiederum zu Automatisierungsklassen 23 zusammenfassen. Demzufolge können Automatisierungsklassen 23 nicht nur physikalische Objekte, wie z.B. Motoren, Ventile, Behälter, sondern auch ganze Prozesse oder Teilprozesse repräsentieren.

Wie insbesondere aus Fig. 2 entnehmbar ist, bildet die Steuerung 26 bzw. der Steuerungsanteil einen serverbezogenen Anteil bzw. Serveranteil 41 einer Automatisierungsklasse 23. Üblicherweise ist der Automatisierungsanteil 24 betreffend die Datenerfassung 30 ebenso ein serverbezogener Anteil bzw. ein Serveranteil 41 einer Automatisierungsklasse 23. In Einzelfällen, z.B. bei der Protokollierung von Benutzeraktionen oder vom Benutzern ausgelöster Aktivitäten, liegen clientbezogene Anteile bzw. Clientanteile 42 vor.

Zumindest eine Teilmenge der restlichen Automatisierungsanteile 24, wie z.B. die Bedienerschnittstelle 29, die Visualisierung 28 und/oder die Konfigurationsschnittstelle 32, sind clientbezogene Anteile bzw. Clientanteile 42 einer Automatisierungsklasse 23.

Für den Fall, daß die Automatisierungsanteile 24 betreffend Datenevaluierung 31 und Dokumentation 35 in einer Automatisierungsklasse 23 präsent sind, so sind diese Automatisierungsanteile 24 als clientbezogene Anteile bzw. als Clientanteile 42 kategorisiert.

Grundsätzlich sei hierbei bemerkt, daß die Serveranteile 41 einer Automatisierungsklasse 23 bzw. eines Objektes permanent existieren. Die Clientanteile 42 hingegen werden bei Bedarf und bevorzugt zur Laufzeit erzeugt bzw. auch wieder verworfen. Die Clientanteile 42 einer Automatisierungsklasse 23 können - wie insbesondere aus Fig. 4 ersichtlich ist - mehrfach und simultan existieren. Bei ihrer Erzeugung bevorzugt zur Laufzeit der Automatisierungsklasse 23 werden sie an den bereits existierenden Serveranteil 41 gelinkt. Die Serveranteile 41 bestehen nur einmal pro Automatisierungsklasse 23 bzw. Objekt und deren Erzeugung geht mit der Objekterzeugung bzw. der Erzeugung der Automatisierungsklasse 23 einher.

Weiters ist insbesondere Fig. 2 zu entnehmen, daß die serverbezogenen Datenanteile 37 für die Funktionalitäten aller Automatisierungsanteile 24 verfügbar sind.

Die Erstellung eines klassenspezifischen Datensatzes erfolgt unter Berücksichtigung des internationalen Standards IEC 1131. Insbesondere sind die entsprechenden elementaren Datentypen, die generischen Datentypen und die variablen Deklarationen unterstützt.

Beim erfindungsgemäßen Automatisierungssystem sind die elementaren Datentypen, wie diese vorwiegend beim Steuerungsanteil 26 benötigt werden, durch Anteile des Alarmwesens 27, der Visualisierung 28, der Bedienerschnittstelle 29, der Konfigurationsschnittstelle 32, der Datenerfassung 30, der Datenevaluierung 31 und der Bildverarbeitung 33 ergänzt. Insbesondere sind die elementaren Datentypen durch Alarme, graphische Datentypen, datentechnische Typen wie z.B. Tabellen und bildtechnische Typen wie z.B. Videobilder ergänzt.

Wie vorhergehend bereits erläutert, ist der Datensatz einer Automatisierungsklasse 23 grundsätzlich nach server- und clientbezogenen Anteilen unterschieden. Die serverbezogenen Anteile bzw. Serveranteile 41, wie z.B. die Steuerung 26, existieren über die gesamte Lebenszeit einer individuellen Kopie einer Automatisierungsklasse 23 bzw. eines Objektes. Die clientbezogenen Anteile bzw. Clientanteile 42, wie z.B. die Visualisierung 28, hingegen werden jeweils neu erzeugt, wenn eine bestimmte clientbezogene Funktionalität benötigt wird. Dadurch können also die clientbezogenen Anteile für ein bestimmtes Objekt mehrfach und simultan existieren, während die serverbezogenen Anteile nur ein einziges Mal per Automatisierungsklasse oder Objekt und permanent bestehen.

Zu den verschiedenen Datentypen existieren außerdem spezifische Attribute, die spezielle Eigenschaften zwischen den Automatisierungsanteilen 24 einer Automatisierungsklasse 23 bzw. eines Objektes transportieren oder spezielle Aufgaben übernehmen. Hierzu ist z.B. eine Steuerungsvariable mit einem Gültigkeitsattribut ausgestattet. Die binäre Information des Gültigkeitsattributes wird dabei stets zusammen mit dem eigentlichen Wert der Variable transportiert. Mit diesem Validierungsmechanismus bzw. mit diesem Gültigkeitsattribut kommunizieren eine Datenquelle und eine Datensenke auch über die Gültigkeit einer Variable, sodaß sich die Datensenke selektiv auf die vorherrschenden Verhältnisse abstimmen kann.

Weiters können die numerischen Steuerungsvariablen optional über die Attribute Minimalwert, Maximalwert und Dimension verfügen, sodaß diese Eigenschaften ohne zusätzliche Konfiguration direkt von anderen Automatisierungsanteilen 24, wie z.B. von der Bedienerschnittstelle 29 oder von der Datenerfassung 30, übernommen werden können. Dadurch kann sich beispielsweise ein Schieberegler ohne zusätzlichen Konfigurationsaufwand automatisch an die individuellen Gegebenheiten anpassen.

Die Implementierung der Funktionalitäten bzw. Automatisierungsanteile 24 erfolgt in einem Klasseneditor. Der Klasseneditor ist dabei ein graphischer Editor, der eine Kombination von verschiedenen graphischen und automatisierungstechnischen Grundelementen ermöglicht.

Die Steuerung 26 einer Automatisierungsklasse 23 ist die Summe aller steuerungstechnischen Grundelemente, wie z.B. Funktionsblöcke und deren logische Verknüpfung. Insbesondere werden für die Steuerung 26 allgemein bekannte graphische Sprachen und textuelle Sprachen unterstützt. Die Steuerung 26 kann auf dem Hostsystem bzw. den Serverrechnern 9 bis 11 in einer sogenannten "Software SPS" oder in den externen Automatisierungsgeräten 3, 4 oder verteilt auf die "Software SPS" und die externen Automatisierungsgeräte 3, 4 ausgeführt werden.

Wesentlich ist dabei, daß sowohl bei der externen Ausführung auf den Automatisierungsgeräten 3, 4 als auch bei der verteilten Ausführung mittels der "Software SPS" und den externen Automatisierungsgeräten 3, 4 der Programmtransfer vom Hostsystem bzw. von den Serverrechnern 9 bis 11 zum externen Automatisierungsgerät 3, 4 für den Benutzer transparent gestaltet ist. Dies wird durch Automatisierungsklassen 23 erreicht, die neben der Steuerung 26 auch die Ladevorschriften für die externen Automatisierungsgeräte 3, 4 beinhalten.

Die Visualisierung 28 einer Automatisierungsklasse 23 ist die Summe aller graphischen Elemente, die innerhalb eines speziellen graphischen Rechtecks angeordnet werden. Das graphische Rechteck ist dabei von variabler Größe und kann beliebig skaliert und gedreht werden. Die Visualisierung 28 einer Automatisierungsklasse 23 wird mit verschiedenen graphischen Elementen, wie z.B. Text, Rechtecke, Ellipsen, Polygone, Linien oder spezifischen automatisierungstechnischen Elementen, wie Trends, Rohrleitungen etc., durchgeführt.

Die Bedienerschnittstelle 29 einer Automatisierungsklasse 23 ist ebenso durch die Summe von graphischen Elementen gebildet, die innerhalb eines anderen, speziellen graphischen Rechtecks angeordnet sind. Im Gegensatz zur Visualisierung 28, die nur ein einziges Mal pro Automatisierungsklasse 23 vorkommen darf, können beliebig viele Bedienerschnittstellen 29 für eine bestimmte Automatisierungsklasse 23 definiert werden. Für die Bedienerschnittstelle 29 stehen neben den graphischen und automatisierungstechnischen Grundelementen auch Bedienelemente wie Schalter, Schieberegler und dgl. sowie editierbare Textfelder zur Verfügung.

Für das Alarmwesen 27 einer Automatisierungsklasse 23 ist ein spezieller binärer Datentyp "Alarm" vorgesehen. Dieser Datentyp "Alarm" besitzt verschiedene Attribute die festlegen, welche Aktionen beim Auftreffen oder Verschwinden eines Alarms zu ergreifen sind. Beispielsweise ist beim Auftreten eines Alarms automatisch ein Eintrag in ein Systemjournal vorgesehen oder es sind verschiedene Benutzergruppen zu benachrichtigen.

Zusätzlich ist durch den speziellen Datentyp "Alarm" eine automatische Alarmkonfiguration eines ganzen Projektes ermöglicht. Hierzu durchsucht das System alle Automatisierungsklassen 23 bzw. Objekte nach Alarmvariablen und ordnet das Ergebnis nach Benutzergruppen, Priorität, Aktualität oder dgl. Das Alarmwesen 27 ist grundlegend ein serverbezogener Anteil einer Automatisierungsklasse 23. Die Alarmbearbeitung hingegen stellt einen clientbezogenen Anteil dar.

Die Automatisierungsanteile 24 betreffend Datenerfassung 30 bzw. die Datenevaluierung 31 sind die datenbezogenen Anteile einer Automatisierungsklasse 23 und sind mit speziellen Grundelementen umgesetzt. Dazu gehören Trends, Tabellen oder spezielle Datenbankfuntionsblöcke. Die Aufzeichnung der historischen Entwicklung einer Variable stellt einen serverbezogenen Anteil bzw. Serveranteil 41 dar. Hingegen ist die Darstellung derselben ein Clientanteil 42.

Das selbe gilt für das Aufzeichnen von Ereignissen in Datenbanken. Die Aufzeichnung selbst ist serverbezogen, die Visualisierung der Daten in den entsprechenden Tabellen hingegen ist clientbezogen. Ähnlich wie bei der Steuerung 26 müssen die datenbezogenen Anteile häufig mit externen Komponenten insbesondere Datenbanken kommunizieren. Die dazu notwendige Intelligenz ist in die jeweilige Automatisierungsklasse 23 integriert.

Die Konfigurationsschnittstelle 32 einer Automatisierungsklasse 23 ist die Summe der graphischen Elemente, die innerhalb eines Konfigurationsrechtecks anzuordnen sind. Die Rechtecke sind dabei in ihrer Größe variabel. Für die Konfigurationsschnittstelle 32 stehen die selben Grundelemente wie für die Bedienerschnittstelle 29 zur Verfügung. Die Konfigurationsschnittstelle 32 ist dem Benutzer einer Automatisierungsklasse 23, typischerweise einem Anwendungsprogrammierer, während der Programmierungs- oder Konfigurationsphase zur Verfügung gestellt.

Die Simulation 34 ist ebenso ein Aspekt bei der Erstellung einer Automatisierungsklasse 23. Bei konsequenter Ausstattung aller Automatisierungsklassen 23 mit einem Simulationsanteil ist es ermöglicht, ganze Prozesse mit geringen Aufwand zu simulieren. Die Umschaltung zwischen Normal- und Simulationsbetrieb erfolgt über eine Steuerungsvariable, an deren Zustand sich alle anderen Automatisierungsanteile 24 bzw. Funktionalitäten orientieren und einstellen.

Die Dokumentation 35 einer Automatisierungsklasse 23 erledigt sich nahezu automatisch im Zuge des Entwicklungsprozesses. Neben dem graphischen Grundelement Text unterstützt der Klasseneditor eine HTML-Grundklasse, über die dem Benutzer einer Automatisierungsklasse 23 die übliche Online-Hilfe zur Verfügung gestellt werden kann.

Selbstverständlich ist es im Rahmen der Erfindung, insbesondere bei kleineren technischen Anlagen, auch möglich, die Hardwarestruktur zu minimieren, indem lediglich ein Rechner eingesetzt wird, welcher rein logisch die Client-Server-Funktionalitäten übernimmt, physikalisch gesehen aber nur ein Rechner oder ein Rechnerpaar angeordnet ist.

Der Ordnung halber sei abschließend darauf hingewiesen, daß zum besseren Verständnis der erfindungswesentlichen Zusammenhänge die Funktionsblöcke stark abstrakt dargestellt wurden.

Die den eigenständigen erfinderischen Lösungen zugrundeliegende Aufgabe kann der Beschreibung entnommen werden.

Vor allem können die einzelnen in den Fig. 1; 2, 3, 4 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

### Bezugszeichenaufstellung

- 1: Automatisierungssystem
- 2: Feldebene
- 3: Automatisierungsgerät
- 4: Automatisierungsgerät
- 5: Schnittstellenmodul

- 6: Schnittstellenmodul
- 7: Steuerungsebene
- 8: Feldbussystem
- 9: Serverrechner
- 10: Serverrechner

- 11: Serverrechner
- 12: Serverpaar
- 13: Netzwerk
- 14: Verwaltungsebene
- 15: Clientebene

- 16: Clientrechner
- 17: Clientrechner
- 18: Clientrechner
- 19: Standardnetzwerk
- 20: Direktverbindung

- 21: Direktverbindung
- 22: Direktverbindung
- 23: Automatisierungklasse
- 24: Automatisierungsanteil
- 25: Hauptanteil

- 26: Steuerung
- 27: Alarmwesen
- 28: Visualisierung
- 29: Bedienerschnittstelle
- 30: Datenerfassung

- 31: Datenevaluierung
- 32: Konfigurationsschnittstelle
- 33: Bildverarbeitung
- 34: Simulation
- 35: Dokumentation

- 36: Nebenanteil
- 37: Datenanteil (serverbezogen)
- 38: Datenanteil (clientbezogen)
- 39: Funktionsanteil (serverbezogen)
- 40: Funktionsanteil (clientbezogen)

- 41: Serveranteil
- 42: Clientanteil

## Patentansprüche

1. Automatisierungssystem zur Lösung einer prozeßtechnischen Aufgabenstellung oder zumindest zum Betreiben einer technischen Anlage, insbesondere einer Industrieanlage, mittels einem Rechnersystem, welches in wenigstens eine Feldebene mit Feldbuskomponenten und Automatisierungsgeräten, in eine Steuerungsebene mit zumindest einem Serverrechner und in eine Clientebene mit einem oder mehreren Clientrechnern gegliedert ist, **dadurch gekennzeichnet, daß** die Entwicklung einer Automatisierungsklasse (23), nämlich von physikalischen Anlagenobjekten wie Motoren, Ventilen oder auch von Teilprozessen und von Funktionalitäten, welche diese Anlagenobjekte in einem prozeßtechnischen Ablauf zusammenfassen, in einem einheitlichen Kontext für einzelne, verschiedenartige Automatisierungsanteile (24), wie z.B. Steuerung, Alarmwesen, Visualisierung, Bedienerschnittstelle, etc., der automatisierungstechnischen Aufgabe stattfindet und die Entwicklung der Automatisierungsklasse (23) einerseits auf serverbezogene Datenanteile (37) und andererseits auf clientbezogene Datenanteile (38) aufbaut, wobei die serverbezogenen Datenanteile (37) gemeinsam mit der Automatisierungsklasse (23) erzeugt werden und über die gesamte Lebenszeit der Automatisierungsklasse (23) bestehen bleiben und die clientbezogenen Datenanteile (38) zur Laufzeit erzeugt werden und spezifisch für die jeweiligen Clientanteile (42) der Automatisierungsklasse (23) sind, und ein Automatisierungsanteil (24) aus serverbezogenen Datenanteilen (37), clientbezogenen Datenanteilen (38) und Funktionalitäten bzw. Funktionsanteilen, die durch grafische und/oder textuelle Mechanismen gebildet sind, die jeweils optimal auf die Anforderungen eines bestimmten Automatisierungsanteils (24) ausgerichtet sind, zusammengefaßt ist.

2. Automatisierungssystem nach Anspruch 1, **dadurch gekennzeichnet, daß** Serveranteile (41) einer Automatisierungsklasse (23) permanent existieren.

3. Automatisierungssystem nach Anspruch 1 oder 2, **dadurch gekennzeichnet, daß** die Clientanteile (42) einer Automatisierungsklasse (23) bei Bedarf zur Laufzeit erzeugt und verworfen werden.

4. Automatisierungssystem nach einem oder mehreren der vorhergehenden Ansprüche, **dadurch gekennzeichnet, daß** Clientanteile (42) einer Automatisierungsklasse (23) simultan bestehen.

5. Automatisierungssystem nach einem oder mehreren der vorhergehenden Ansprüche, **dadurch gekennzeichnet, daß** die Clientanteile (42) bei ihrer Erzeugung an den entsprechenden, bereits bestehenden Serveranteil (41) gelinkt werden.

6. Automatisierungssystem nach einem oder mehreren der vorhergehenden Ansprüche, **dadurch gekennzeichnet, daß** einzelne Automatisierungsanteile (24) graphisch und/oder textuell in eine Automatisierungsklasse (23) integrierbar sind.

7. Automatisierungssystem nach einem oder mehreren der vorhergehenden Ansprüche, **dadurch gekennzeichnet, daß** die Automatisierungsanteile (24) durch eine Steuerung (26) und/oder durch ein Alarmwesen (27) und/oder durch eine Visualisierung (28) und/oder durch Bedienerschnittstellen (29) und/oder durch eine Datenerfassung (30) und/oder durch eine Datenevaluierung (31) definiert sind.

8. Automatisierungssystem nach einem oder mehreren der vorhergehenden Ansprüche, **dadurch gekennzeichnet, daß** die Automatisierungsanteile (24) im Hinblick auf ihre spätere Verwendung, auf die unterschiedlichen technischen Voraussetzungen und auf die Exekution im Laufzeitsystem nach Serveranteilen (41) und Clientanteilen (42) kategorisiert sind.

9. Automatisierungssystem nach einem oder mehreren der vorhergehenden Ansprüche, **dadurch gekennzeichnet, daß** die Automatisierungsanteile (24) betreffend Steuerung (26) und Datenerfassung (30) Serveranteile (41) darstellen.

10. Automatisierungssystem nach einem oder mehreren der vorhergehenden Ansprüche, **dadurch gekennzeichnet, daß** die Automatisierungsanteile (24) betreffend Bedienerschnittstelle (29), Visualisierung (28) und Datenevaluierung (31) Clientanteile (42) darstellen.

11. Automatisierungssystem nach einem oder mehreren der vorhergehenden Ansprüche, **dadurch gekennzeichnet, daß** programmtechnische Mittel zur Bereitstellung von Funktionalitäten zur Abdeckung der Automatisierungsanteile (24) ausgebildet sind.

12. Automatisierungssystem nach einem oder mehreren der vorhergehenden Ansprüche, **dadurch gekennzeichnet, daß** die Funktionsanteile (39, 40) den Datenanteilen (38) der entsprechenden Clientanteile (42) und den Datenanteilen (37) der Serveranteile (41) zugeordnet sind.

13. Automatisierungssystem nach einem oder mehreren der vorhergehenden Ansprüche, **dadurch gekennzeichnet, daß** Nebenaspekte der Automatisierungsanteile (24) durch eine Konfigurationsschnittstelle (32) und/oder eine Bildverarbeitung (33) und/oder eine Simulation (34) und/oder eine Dokumentation (35) gebildet sind.

14. Automatisierungssystem nach einem oder mehreren der vorhergehenden Ansprüche, **dadurch gekennzeichnet, daß** die Steuerungsebene (7) durch Anordnung zumindest eines Serverpaares (12) redundant aufgebaut ist.

15. Verfahren zur Lösung einer automatisierungstechnischen, verschiedenartige Automatisierungsanteile, wie z.B. Steuerung, Alarmwesen, Visualisierung, Bedienerschnittstelle, etc., beinhaltenden Aufgabenstellung oder zumindest zum Betreiben einer technischen Anlage, insbesondere einer Industrieanlage, unter Zuhilfenahme von programmtechnischen Mitteln, welche zur Exekution in einem mehrere hardwarebezogene Ebenen umfassenden Rechnersystem vorgesehen sind, das in eine Steuerungsebene mit zumindest einem Serverrechner und in eine Clientebene mit einem oder mehreren Clientrechnern gegliedert ist, **dadurch gekennzeichnet, daß** die gesamte Aufgabenstellung exemplarisch in einer Automatisierungsklasse für physikalische Anlagenobjekte wie Motore, Ventile oder auch Teilprozesse und für Funktionalitäten, welche diese Anlagenobjekte in einem prozeßtechnischen Ablauf zusammenfassen, gelöst wird und in diesem Entwicklungsprozeß ein klassenspezifischer Datensatz erstellt wird, in welchem neben Steuerungsdaten auch Daten für eine Visualisierung und/oder eine Bedienerschnittstelle definiert werden, wobei alle Teile des Datensatzes innerhalb des Kontext der entstehenden Automatisierungsklasse definiert werden und eine Kategorisierung der Daten nach serverbezogenen Datenanteilen bzw. Serveranteilen und clientbezogenen Datenanteilen bzw. Clientanteilen vorgenommen wird, wobei die Serveranteile, wie z.B. für die Steuerung, über die gesamte Einsatzzeit einer Automatisierungsklasse bestehen und die Clientanteile, wie z.B. für die Visualisierung, jeweils neu erzeugt werden, wenn die jeweilige Funktionalität bzw. der jeweilige Automatisierungsanteil benötigt wird und ein Automatisierungsanteil aus serverbezogenen Datenanteilen, clientbezogenen Datenanteilen und Funktionalitäten bzw. Funktionsanteilen, die durch grafische und/oder textuelle Mechanismen gebildet werden, die jeweils optimal auf die Anforderungen eines bestimmten Automatisierungsanteils ausgerichtet sind, zusammengefaßt wird.

16. Verfahren nach Anspruch 15, **dadurch gekennzeichnet, daß** die Einteilung des Datensatzes in Serveranteile und Clientanteile im Hinblick auf die verschiedenartigen Automatisierungsanteile und physikalischen Geräte erfolgt.

17. Verfahren nach Anspruch 15 oder 16, **dadurch gekennzeichnet, daß** die Erstellung des Datensatzes in graphischer und/oder textueller Form erfolgt.

18. Verfahren nach einem oder mehreren der Ansprüche 15 bis 17, **dadurch gekennzeichnet, daß** alle Funktionsanteile der automatisierungstechnischen Aufgabe innerhalb des Kontextes der entstehenden Automatisierungsklasse gelöst werden und gleichfalls eine Kategorisierung nach serverbezogenen Funktionsanteilen und clientbezogenen Funktionsanteilen durchgeführt wird.

19. Verfahren nach einem oder mehreren der Ansprüche 15 bis 18, **dadurch gekennzeichnet, daß** eine erstellte Automatisierungsklasse in einer Bibliothek publiziert wird.

20. Verfahren nach einem oder mehreren der Ansprüche 15 bis 19, **dadurch gekennzeichnet, daß** mittels netzwerktechnischer Vorrichtungen auf die Bibliothek zugegriffen werden kann.

21. Verfahren nach einem oder mehreren der Ansprüche 15 bis 20, **dadurch gekennzeichnet, daß** die verschiedenartigen Automatisierungsklassen der Bibliothek über eine globale, netzwerktechnische Vorrichtung, insbesondere über das "Internet", zur Verfügung gestellt werden.

22. Verfahren nach einem oder mehreren der Ansprüche 15 bis 21, **dadurch gekennzeichnet, daß** Automatisierungsprojekte aus einer oder mehreren individuellen Kopie(n) von einer oder mehreren Automatisierungsklasse(n) zusammengesetzt werden und bei jeder Kopie einer Automatisierungsklasse die Struktur des Datensatzes und die Funktionalitäten übernommen werden.

23. Verfahren nach einem oder mehreren der Ansprüche 15 bis 22, **dadurch gekennzeichnet, daß** die Verknüpfung der Kopien der Automatisierungsklassen zum Automatisierungsprojekt mit den gleichen programmtechnischen Mitteln erfolgt, welche zur Erstellung der Automatisierungsklassen eingesetzt werden.

24. Verfahren nach einem oder mehreren der Ansprüche 15 bis 23, **dadurch gekennzeichnet, daß** mehrere Automatisierungsklassen wiederum zu einer eigenen Automatisierungsklasse zusammengefaßt werden und dadurch Teilprozesse repräsentieren können.

25. Verfahren nach einem oder mehreren der Ansprüche 15 bis 24, **dadurch gekennzeichnet, daß** die Automatisierungsanteile ersteres im Hinblick auf ihre spätere Verwendung, weiters auf die unterschiedlichen technischen Voraussetzungen sowie auf die Exekution im Laufzeitsystem nach Serveranteilen und Clientanteilen kategorisiert werden.

26. Verfahren nach einem oder mehreren der Ansprüche 15 bis 25, **dadurch gekennzeichnet, daß** die Serveranteile im Laufzeitsystem nur einmal sowie permanent bestehen und die Clientanteile mehrfach und simultan existieren können.

## Claims

1. Automation system for solving a technical-process task or at least for operating a technical system, in particular an industrial plant, by means of a computer system, which is broken down into at least a field level with field bus components and automation equipment, a control level with at least one server computer and a client level with one or more client computers, **characterised in that** an automation class (23), specifically including physical system objects such as motors and valves or part-processes and functions, is developed grouping these system objects in a technical-process sequence, and is so in a standard context for individual automation elements (24), such as a control system, alarm system, display system, user interface, etc., for the technically automated task for example, and the automation class (23) is compiled on the basis of server-related data elements (37) on the one hand and client-related data elements (38) on the other, the server-related data elements (37) being generated together with the automation class (23) and being applied for the entire service life of the automation class (23) whilst the client-related data elements (38) are generated at the time of running and specifically for the respective client elements (42) of the automation class (23), and an automation element (24) is made up of server-related data elements (37), client-related data elements (38) and functions or functional elements based on graphical and/or textual mechanisms which are optimised to meet the requirements of a specific automation element (24).

2. Automation system as claimed in claim 1, **characterised in that** server elements (41) of an automation class (23) exist on a permanent basis.

3. Automation system as claimed in claim 1 or 2, **characterised in that** the client elements (42) of an automation class (23) are generated and compiled as and when required at the time of running.

4. Automation system as claimed in one or more of the preceding claims, **characterised in that** client elements (42) of an automation class (23) exist simultaneously.

5. Automation system as claimed in one or more of the preceding claims, **characterised in that** the client elements (42) are linked to the corresponding, already existing server element (41) as and when they are generated.

6. Automation system as claimed in one or more of the preceding claims, **characterised in that** individual automation elements (24) can be graphically and/or textually integrated in an automation class (23).

7. Automation system as claimed in one or more of the preceding claims, **characterised in that** the automation elements (24) are defined by means of a control system (26) and/or an alarm system (27) and/or a display system (28) and/or user interfaces (29) and/or a data acquisition system (30) and/or a data evaluation (31).

8. Automation system as claimed in one or more of the preceding claims, **characterised in that** the automation elements (24) are categorised into server elements (41) and client elements (42) according to different technical requirements and execution in the run-time system with a view to their subsequent application.

9. Automation system as claimed in one or more of the preceding claims, **characterised in that** the automation elements (24) relating to the control system (26) and data acquisition system (30) are server elements (41).

10. Automation system as claimed in one or more of the preceding claims, **characterised in that** the automation elements (24) relating to the user interface (29), display system (28) and data evaluation (31) are client elements (42).

11. Automation system as claimed in one or more of the preceding claims, **characterised in that** programming means are provided as a means of providing functions to run automation elements (24).

12. Automation system as claimed in one or more of the preceding claims, **characterised in that** the function elements (39, 40) are assigned to the data elements (38) of the corresponding client elements (42) and the data elements (37) of the server elements (41).

13. Automation system as claimed in one or more of the preceding claims, **characterised in that** subsidiary aspects of the automation elements (24) are represented by means of a configuration interface (32) and/or an image processing system (33) and/or a simulation (34) and/or documentation (35).

14. Automation system as claimed in one or more of the preceding claims, **characterised in that** the control level (7) is designed to incorporate at least one server pair (12).

15. Method of solving a task incorporating technically automated automation elements of different types, such as a control system, alarm system, display system, user interface, etc., or at least for operating a technical system, in particular an industrial plant, supported by programming means provided for execution purposes in a computer system based on several hardware-related levels broken down into a control level with at least one server computer and a client level with one or more client computers, **characterised in that** the task as a whole is solved by compiling a copy of an automation class for physical system objects such as motors, valves or also part-processes and for functions, which groups these system objects in a technical process sequence, and a class-specific data set is produced during this development process in which data for a display system and/or a user interface is defined in addition to control data, all parts of the data set being defined within the context of the automation class being created, and the data is categorised into server-related data elements or server elements and client-related data elements or client elements, whereby the server elements, for example for the control system, exist for the entire service time of an automation class whilst the client elements, for example for the display system, are created anew as and when the respective function or the respective automation element is needed, and an automation element is made up of server-related data elements, client-related data elements and functions or functional elements based on graphical and/or textual mechanisms which are optimised to suit the requirements of a specific automation element.

16. Method as claimed in claim 15, **characterised in that** the division of the data set into server elements and client elements is applied on the basis of the different types of automation elements and physical devices.

17. Method as claimed in claim 15 or 16, **characterised in that** the data set is created in graphical and/or text format.

18. Method as claimed in one or more of claims 15 to 17, **characterised in that** all function elements of the technical automation task are solved within the context of the automation class being created and are also categorised into server-related function elements and client-related function elements.

19. Method as claimed in one or more of claims 15 to 18, **characterised in that** once an automation class has been created, it is published in a library.

20. Method as claimed in one or more of claims 15 to 19, **characterised in that** the library can be accessed by means of network systems.

21. Method as claimed in one or more of claims 15 to 20, **characterised in that** the different types of automation classes in the library are made available via a global network system, in particular the Internet.

22. Method as claimed in one or more of claims 15 to 21, **characterised in that** automation projects are compiled from one or more individual copy (copies) of one or more automation class(es) and the structure of the data set and the functions are adopted as is in every copy of an automation class.

23. Method as claimed in one or more of claims 15 to 22, **characterised in that** the copies of the automation classes are linked to the automation project by the same programming means as those used to create the automation classes.

24. Method as claimed in one or more of claims 15 to 23, **characterised in that** several automation classes are in turn grouped in a separate automation class and may therefore represent part-processes.

25. Method as claimed in one or more of claims 15 to 24, **characterised in that** the automation elements are categorised into server elements and client elements initially on the basis of their subsequent application and subsequently on the basis of different technical requirements as well as execution in the run-time system.

26. Method as claimed in one or more of claims 15 to 25, **characterised in that** the server elements exist only once and permanently in the run-time system, whilst the client elements can exist in multiple copies and simultaneously.

## Revendications

1. Système d'automatisation pour la réalisation de tâches définies dans le cadre de la technique des processus ou au moins pour faire fonctionner une installation technique, notamment une installation industrielle, au moyen d'un ensemble de traitement de l'information qui est divisé en au moins un plan de champ avec des composants de buse de champ et des appareils d'automatisation, en un plan de commande avec au moins un calculateur serveur et en un plan client avec un ou plusieurs calculateurs clients, **caractérisé en ce que** le développement d'une classe d'automatisation (23), à savoir d'objets d'installation physiques comme des moteurs, des soupapes ou également de processus partiels et de fonctionnalités, qui réunissent ces objets d'installation en un déroulement de technique de processus, a lieu dans un contexte uniforme pour des parties d'automatisation différentes individuelles (24), comme par exemple la commande, le système d'alarme, la visualisation, l'interface opérateur etc. du travail défini dans le cadre de la technique des processus, et que le développement de la classe d'automatisation (23) repose, d'une part, sur des parties de données (37) se rapportant au serveur et, d'autre part, sur des parties de données (38) se rapportant au client, où les parties de données (37) se rapportant au serveur sont produites conjointement avec la classe d'automatisation (23) et sont conservées pendant toute la durée de vie de la classe d'automatisation (23), et que les parties de données (38) se rapportant au client sont produites pour le temps d'exploitation et sont spécifiques aux parties de client respectives (42) de la classe d'automatisation (23), et **en ce qu'**une partie d'automatisation (24) est constituée de parties de données (37) se rapportant au serveur, de parties de données (38) se rapportant au client et de fonctionnalités respectivement de parties fonctionnelles qui sont formées par des mécanismes graphiques et/ou textuels qui sont orientées respectivement d'une manière optimale aux exigences d'une partie d'automatisation déterminée (24).

2. Système d'automatisation selon la revendication 1, **caractérisé en ce que** des parties de serveur (41) d'une classe d'automatisation (23) existent en permanence.

3. Système d'automatisation selon la revendication 1 ou 2, **caractérisé en ce que** les parties de client (42) d'une classe d'automatisation (23) sont produites en cas de besoin pendant le temps d'exploitation et sont rejetées.

4. Système d'automatisation selon l'une ou plusieurs des revendications précédentes, **caractérisé en ce que** des parties de client (42) d'une classe d'automatisation (23) existent simultanément.

5. Système d'automatisation selon l'une ou plusieurs des revendications précédentes, **caractérisé en ce que** les parties client (42), lors de leur production, sont liées à la partie de serveur correspondante (41), déjà existante.

6. Système d'automatisation selon l'une ou plusieurs des revendications précédentes, **caractérisé en ce que** les parties d'automatisation individuelles (24) peuvent être intégrées d'une manière graphique et/ou textuelle dans une classe d'automatisation (23).

7. Système d'automatisation selon l'une ou plusieurs des revendications précédentes, **caractérisé en ce que** les parties d'automatisation (24) sont définies par une commande (26) et/ou un système d'alarme (27) et/ou une visualisation (28) et/ou par des interfaces d'opérateur (29) et/ou par une saisie de données (30) et/ou par une évaluation de données (31).

8. Système d'automatisation selon l'une ou plusieurs des revendications précédentes, **caractérisé en ce que** les parties d'automatisation (24) sont catégorisées en vue de leur utilisation ultérieure, aux conditions techniques différentes et à l'exécution dans le système de temps d'exploitation selon des parties de serveur (41) et des parties de client (42).

9. Système d'automatisation selon l'une ou plusieurs des revendications précédentes, **caractérisé en ce que** les parties d'automatisation (24) concernant la commande (26) et la détection de données (30) constituent des parties serveur (41).

10. Système d'automatisation selon l'une ou plusieurs des revendications précédentes, **caractérisé en ce que** les parties d'automatisation (24) concernant l'interface d'opérateur (29), la visualisation (28) et l'évaluation de données (31) constituent des parties client (42).

11. Système d'automatisation selon l'une ou plusieurs des revendications précédentes, **caractérisé en ce que** des moyens se rapportant à la technique des programmes sont réalisés pour mettre à disposition des fonctionnalités pour couvrir les parties d'automatisation (24).

12. Système d'automatisation selon l'une ou plusieurs des revendications précédentes, **caractérisé en ce que** les parties fonctionnelles (39, 40) sont associées aux parties de données (38) des parties client correspondantes (42) et aux parties de données (37) des parties de serveur (41).

13. Système d'automatisation selon l'une ou plusieurs des revendications précédentes, **caractérisé en ce que** des aspects secondaires des parties d'automatisation (24) sont formés par une interface de configuration (32) et/ou un traitement d'images (33) et/ou une simulation (34) et/ou une documentation (35).

14. Système d'automatisation selon l'une ou plusieurs des revendications précédentes, **caractérisé en ce que** le plan de commande (7) est réalisé d'une manière redondante par l'agencement d'au moins une paire de serveurs (12).

15. Procédé de réalisation de tâches définies dans le cadre de la technique des processus, comprenant des parties d'automatisation diverses, comme par exemple une commande, un système d'alarme, une visualisation, une interface opérateur etc. ou au moins pour faire fonctionner une installation technique, notamment une installation industrielle, à l'aide de moyens se rapportant à des techniques des programmes, qui sont prévus pour l'exécution dans un ensemble de traitement de l'information comprenant plusieurs plans se rapportant au matériel, qui est divisé en un plan de commande avec au moins un calculateur serveur et en un plan client avec un ou plusieurs calculateurs client, **caractérisé en ce que** l'ensemble de l'objet est atteint de manière exemplaire dans une classe d'automatisation pour des objets d'installation physiques, comme des moteurs, des soupapes ou également des processus partiels et pour des fonctionnalités, qui réunissent ces objets d'installation en un déroulement se rapportant à la technique des processus, et qu'il est établi dans ce processus de développement un jeu de données spécifique à la classe, dans lequel, à part des données de commande, également des données pour une visualisation et/ou une interface opérateur sont définies, où toutes les parties du jeu des données sont définies à l'intérieur du contexte de la classe d'automatisation produite, et une catégorisation des données est effectuée selon des parties de données se rapportant au serveur respectivement parties de serveur et des parties de données se rapportant au client respectivement parties de client, où les parties serveur, comme par exemple pour la commande, existent pendant toute la durée d'utilisation d'une classe d'automatisation et que les parties client, comme par exemple pour la visualisation, sont à chaque fois produites nouvellement lorsque la fonctionnalité respective respectivement la partie d'automatisation respective est requise, et une partie d'automatisation est réunie par des parties de données se rapportant au serveur, des parties de données se rapportant au client et des fonctionnalités respectivement parties fonctionnelles, qui sont formées par des mécanismes graphiques et/ou textuels, qui sont orientés respectivement d'une manière optimale aux exigences d'une partie d'automatisation déterminée.

16. Procédé selon la revendication 15, **caractérisé en ce que** la répartition du jeu de données en partie serveur et en partie client a lieu à l'égard des parties d'automatisation et appareils physiques différents.

17. Procédé selon la revendication 15 ou 16, **caractérisé en ce que** le jeu de données est établi sous forme graphique et/ou textuelle.

18. Procédé selon l'une ou plusieurs des revendications 15 à 17, **caractérisé en ce que** toutes les parties fonctionnelles de la tâche se rapportant au cadre de la technique des processus sont résolues à l'intérieur du contexte de la classe d'automatisation produite, et **en ce qu'**on procède également à une catégorisation selon des parties fonctionnelles se rapportant au serveur et des parties fonctionnelles se rapportant au client.

19. Procédé selon l'une ou plusieurs des revendications 15 à 18, **caractérisé en ce qu'**une classe d'automatisation produite est publiée dans une bibliothèque.

20. Procédé selon l'une ou plusieurs des revendications 15 à 19, **caractérisé en ce qu'**on peut accéder à la bibliothèque au moyen de dispositifs se rapportant à la technique des réseaux.

21. Procédé selon l'une ou plusieurs des revendications 15 à 20, **caractérisé en ce que** les classes d'automatisation différentes de la bibliothèque sont mises à disposition par un dispositif global, se rapportant à la technique des réseaux, notamment par "internet".

22. Procédé selon l'une ou plusieurs des revendications 15 à 21, **caractérisé en ce que** des projets d'automatisation sont constitués à partir d'une ou de plusieurs copies individuelles d'une ou de plusieurs classes d'automatisation, et lors de chaque copie d'une classe d'automatisation, la structure du jeu de données et les fonctionnalités sont reprises.

23. Procédé selon l'une ou plusieurs des revendications 15 à 22, **caractérisé en ce que** l'enchaînement des copies des classes d'automatisation pour le projet d'automatisation a lieu avec les mêmes moyens se rapportant à la technique des programmes qui sont utilisés pour établir des classes d'automatisation.

24. Procédé selon l'une ou plusieurs des revendications 15 à 23, **caractérisé en ce que** plusieurs classes d'automatisation peuvent être réunies de nouveau en une classe d'automatisation propre et, de ce fait, peuvent représenter des processus partiels.

25. Procédé selon l'une ou plusieurs des revendications 15 à 24, **caractérisé en ce que** les parties d'automatisation sont catégorisées d'abord en vue de leur utilisation ultérieure, ensuite aux conditions techniques différentes et à l'exécution dans le système de temps d'exploitation selon des parties serveur et des parties client.

26. Procédé selon l'une ou plusieurs des revendications 15 à 25, **caractérisé en ce que** les parties serveur existent dans le système de temps d'exploitation seulement une fois et de manière permanente et que les parties client peuvent exister plusieurs fois et simultanément.
